# EUROPEAN PATENT SPECIFICATION

(11) **EP 4 287 389 B1**
(45) Date of publication and mention of the grant of the patent: **22.04.2026**
(21) Application number: 22912049.8
(22) Date of filing: 23.12.2022
(51) Int. Cl.: H01M 50/591, H01M 50/296, H01M 50/258, H01M 50/264, H01M 50/211, H01M 50/502, H01M 50/289, H01M 50/24, H01M 50/586, H01M 50/209, H01M 50/50, H01M 50/507

(54) **BATTERY MODULE WITH REINFORCED SAFETY**
BATTERIEMODUL MIT VERSTÄRKTER SICHERHEIT
MODULE DE BATTERIE À SÉCURITÉ RENFORCÉE

(30) Priority: 24.12.2021 KR 20210187481; 14.12.2022 KR 20220174863
(43) Date of publication of application: 06.12.2023
(73) Proprietor: LG Energy Solution, Ltd., Seoul 07335 (KR)
(72) Inventor: PARK, Jin-Woo, Daejeon 34122 (KR); KIM, Tae-Geun, Daejeon 34122 (KR); LEE, Chang-Je, Daejeon 34122 (KR); LEE, Bok-Gun, Daejeon 34122 (KR)
(74) Representative: Goddar, Heinz J.
(86) International application number: PCT/KR2022/021252
(87) International publication number: WO 2023/121416

(56) References cited:
- CN-A- 111 864 132
- CN-A- 113 748 563
- KR-A- 20180 135 604
- KR-A- 20180 135 701
- KR-A- 20190 126 608
- KR-A- 20190 126 608
- KR-A- 20210 011 641
- KR-A- 20210 019 891
- US-A1- 2020 411 832

## Description

### TECHNICAL FIELD

The present disclosure relates to a battery, and more particularly, to a battery module with reinforced safety, and a battery pack and a vehicle including the battery same.

### BACKGROUND ART

As the demand for portable electronic products such as smart phones, notebook and wearable devices is rapidly increasing and robots and electric vehicles are commercialized in earnest, high-performance secondary batteries capable of repeated charging and discharging are being actively researched.

Currently commercialized secondary batteries include nickel cadmium battery, nickel hydrogen battery, nickel zinc battery, lithium secondary battery, and so on. Among these, the lithium secondary battery has almost no memory effect to ensure free charge and discharge, compared to the nickel-based secondary battery, and the lithium secondary battery is spotlighted due to a very low discharge rate and a high energy density.

The lithium secondary battery mainly uses a lithium-based oxides and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed therebetween, and an exterior, or a battery case, for hermetically accommodating the electrode assembly together with an electrolyte.

Generally, the lithium secondary batteries may be classified into a can-type secondary battery having an electrode assembly included in a metal can and a pouch-type secondary battery having an electrode assembly included in a pouch of an aluminum laminate sheet, depending on the shape of the exterior.

Recently, secondary batteries are widely used for driving or energy storage not only in small devices such as portable electronic devices but also in medium and large devices such as electric vehicles and energy storage systems (ESS). These secondary batteries may constitute one battery module in such a form that a plurality of secondary batteries are electrically connected and are stored together in a module case. At this time, a plurality of battery cells (secondary batteries) may be present in a dense state in a narrow space to increase energy density inside the battery module.

However, when a plurality of battery cells (secondary batteries) exist in a dense state in a narrow space as above, they may be vulnerable to accidents such as fire or explosion. In particular, when a temperature rises rapidly in one or some battery cells, an event such as thermal runaway propagation in which the temperature rise is propagated to other battery cells may occur. At this time, if such an event is not properly controlled, it may lead to fire or explosion of the battery module or the battery pack, and may even cause great human life and property damage. Moreover, when a thermal event occurs in some battery cells, a venting gas, flame, spark, or the like may be ejected. In addition, when foreign substances such as a venting gas or flame are directed to an adjacent normal cell, thermal runaway, fire, or the like may occur in the adjacent cell.

The document KR 2019 0126608 A discloses a battery module with fixing members inserted at the ends of stacked cells.

The document CN 111 864 132 A discloses a non-aqueous electrolyte battery with a laminate film casing and a resin layer.

### Technical Problem

The present disclosure is designed to solve the problems of the related art, and therefore the present disclosure is directed to providing a battery module capable of reinforcing safety by reducing the influence on adjacent battery cells when a thermal event occurs, and a battery pack and a vehicle including the battery module.

However, the technical problem to be solved by the present disclosure is not limited to the above, and other problems not mentioned herein will be clearly understood by those skilled in the art from the following disclosure.

### Technical Solution

In one aspect of the present disclosure, there is provided a battery module, comprising: a plurality of battery cells having electrode leads; a module case configured to accommodate the plurality of battery cells in an inner space; a separation member configured to divide a space between at least some of the plurality of battery cells and having a slot into which the electrode lead is inserted; and an insulation block having an electrical insulating material and configured to surround an outer side of at least a part of the electrode lead inserted into the slot.

Here, the separation member may have a metal material.

In addition, the insulation block may be configured to electrically insulate the electrode lead and the separation member from each other.

In addition, the insulation block may be configured to seal the slot in a state where the electrode lead is inserted therein.

In addition, the insulation block may include two or more unit blocks coupled to each other.

According to the invention, the separation member includes a first separation portion interposed between adjacent battery cells, and a second separation portion connected to an end of the first separation portion and having the slot formed therein.

In addition, at least one of the first separation portion and the second separation portion may be configured in a plate shape.

In addition, the first separation portion and the second separation portion may be coupled perpendicularly.

In addition, the separation member may further include a third separation portion connected to an end of each of the first separation portion and the second separation portion and configured to cover one side of the plurality of battery cells.

In addition, the insulation block may be configured to be mounted in the slot of the separation member.

In addition, the battery module according to the present disclosure may further comprise a bus bar assembly configured to electrically connect the electrode leads of the plurality of battery cells, and the bus bar assembly may be located outside the separation member.

In addition, the bus bar assembly may include a bus bar housing made of an electrical insulating material and provided outside the separation member, and a bus bar terminal made of an electrical conductive material and coupled to the bus bar housing.

In addition, the insulation block may have a gas collecting portion configured to allow a discharged gas to be introduced therein when the gas is discharged from the battery cell.

In addition, the insulation block may be configured to surround at least a part of a sealing portion of the battery cell.

In addition, the insulation block may include a buffer pad provided at an inner end.

In addition, the insulation block may be configured to be in close contact with the electrode lead or the slot of the separation member when gas is discharged from the battery cell.

In another aspect of the present disclosure, there is also provided a battery pack, comprising the battery module according to the present disclosure.

In still another aspect of the present disclosure, there is also provided a vehicle, comprising the battery module according to the present disclosure.

### Advantageous Effects

According to one aspect of the present disclosure, the safety of the battery module may be improved.

In particular, according to one embodiment of the present disclosure, when a thermal event occurs, the thermal runaway transfer event may be effectively suppressed by removing factors that may affect adjacent battery cells.

In particular, according to one embodiment of the present disclosure, by accommodating each battery cell in a separate space, it is possible to effectively suppress the transfer of flame, spark, heat, foreign matter, or the like to an adjacent battery cell.

In addition, according to one aspect of the present disclosure, it is possible to stably protect the bus bar assembly from flame, heat, or the like.

In addition, according to one aspect of the present disclosure, it is possible to prevent the internal structure of the battery module from collapsing due to flame or the like.

The present disclosure may have various other effects in addition to the above, and such effects will be described in each embodiment, or any effect that can be easily inferred by those skilled in the art will not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIGS. 1 and 2 are a combined perspective view and an exploded perspective view schematically showing the configuration of a battery module according to an embodiment of the present disclosure.
FIG. 3 is an enlarged view showing some components of FIG. 2.
FIG. 4 is a combined perspective view showing the configuration of FIG. 3.
FIG. 5 is a diagram schematically showing some components of the battery module according to an embodiment of the present disclosure.
FIG. 6 is a cross-sectional view, taken along line A1-A1' in FIG. 5.
FIG. 7 is a top view showing some components of the battery module according to an embodiment of the present disclosure.
FIG. 8 is an exploded perspective view schematically showing the configuration of an insulation block according to an embodiment of the present disclosure.
FIG. 9 is a cross-sectional view schematically showing the configuration in which the insulation block is assembled to an electrode lead in the battery module according to an embodiment of the present disclosure.
FIG. 10 is a perspective view schematically showing the configuration of a separation member included in the battery module according to an embodiment of the present disclosure.
FIG. 11 is a perspective view schematically showing the configuration of a separation member included in a battery module according to another embodiment of the present disclosure.
FIG. 12 is a front cross-sectional view schematically showing the configuration in which the electrode lead and the insulation block are inserted into a slot formed in the separation member of FIG. 11.
FIGS. 13 and 14 are exploded perspective views schematically showing the configuration of a separation member included in a battery module according to still other embodiments of the present disclosure.
FIG. 15 is an exploded perspective view showing some components of a battery module according to an embodiment of the present disclosure.
FIG. 16 is a combined perspective view showing the configuration of FIG. 15.
FIG. 17 is a perspective view schematically showing the configuration of an insulation block according to another embodiment of the present disclosure.
FIG. 18 is a cross-sectional view schematically showing the configuration in which the insulation block of FIG. 17 is mounted in the slot of the separation member.
FIG. 19 is a perspective view schematically showing the configuration of an insulation block according to still another embodiment of the present disclosure.
FIG. 20 is a cross-sectional view schematically showing the configuration in which the insulation block of FIG. 19 is mounted in the slot of the separation member.
FIG. 21 is a top view schematically showing some components of the battery module according to an embodiment of the present disclosure.
FIG. 22 is an exploded perspective view schematically showing the configuration of a bus bar assembly according to an embodiment of the present disclosure.
FIG. 23 is a perspective view schematically showing the configuration of an insulation block according to still another embodiment of the present disclosure.
FIG. 24 may be a top view showing a cross-sectional configuration of a part of the battery module including the insulation block of FIG. 23.
FIG. 25 is a perspective view schematically showing the configuration of an insulation block according to still another embodiment of the present disclosure.
FIG. 26 is a cross-sectional view schematically showing some components of the battery module including the insulation block according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, in this specification, terms indicating directions such as "upper", "lower", "left", "right", "front", and "rear" may be used, but these terms are only for convenience of description, it is obvious to those skilled in the art that they may vary depending on the location of a target object or the location of an observer.

In addition, in this specification, various embodiments are included, and for each embodiment, any feature that can be applied identically or similarly is not described in detail, and a feature having a difference will be described in detail.

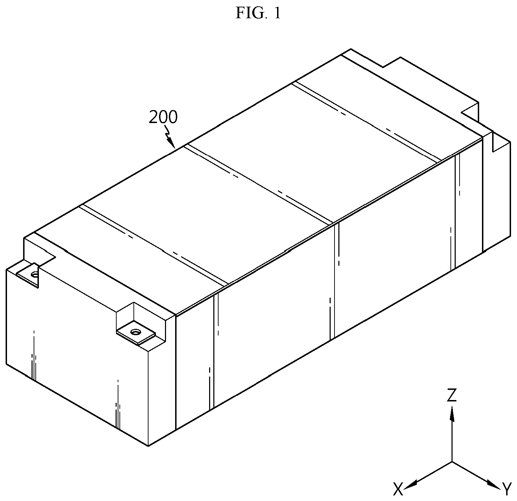

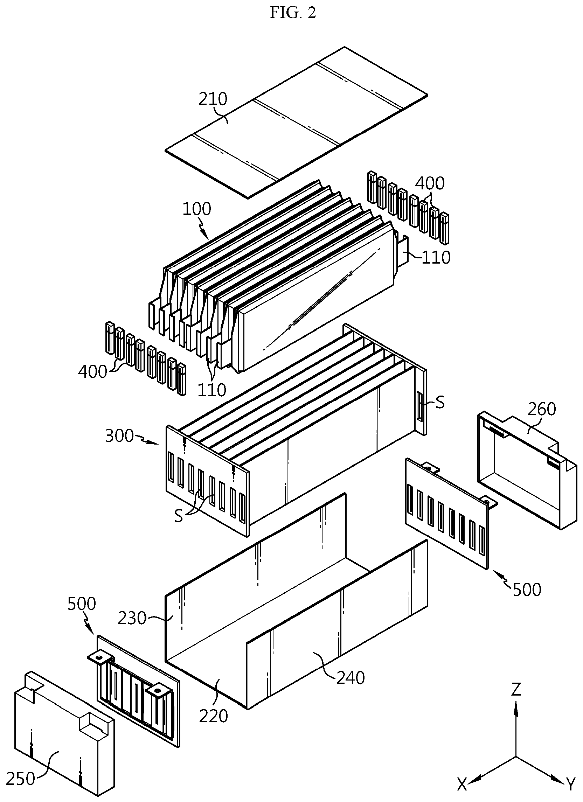

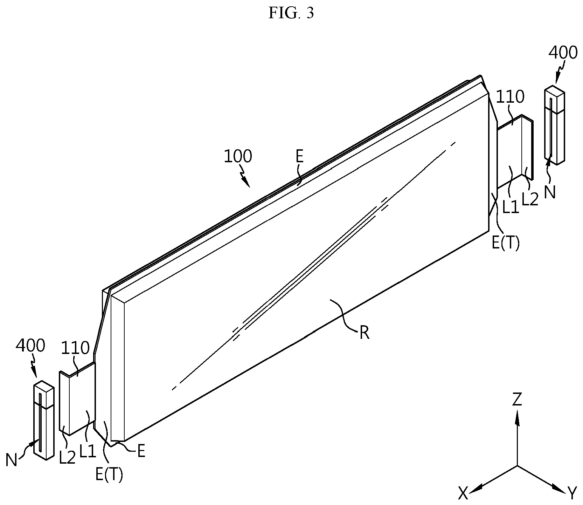

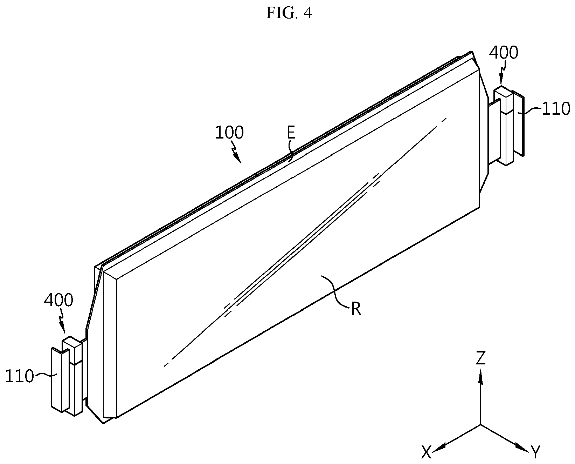

FIGS. 1 and 2 are a combined perspective view and an exploded perspective view schematically showing the configuration of a battery module according to an embodiment of the present disclosure. Also, FIG. 3 is an enlarged view showing some components of FIG. 2, and FIG. 4 is a combined perspective view showing the configuration of FIG. 3.

Referring to FIGS. 1 to 4, the battery module according to the present disclosure may include a battery cell 100, a module case 200, a separation member 300, and an insulation block 400.

The battery cell 100 is a secondary battery, has an electrode assembly, an electrolyte, and an exterior, and may be configured to be repeatedly charged and discharged. The battery cell 100 may be a lithium battery, but the present disclosure is not necessarily limited to a specific type of the battery.

In particular, the battery cell 100 may be a pouch-type battery. In this case, the exterior of the battery cell 100 may be a pouch exterior in which an aluminum layer is wrapped by a polymer layer.

Moreover, the battery cell 100 of this type, namely the pouch-type battery cell 100, may include an accommodation portion indicated by R and a sealing portion indicated by E as shown in FIGS. 3 and 4. Here, the accommodation portion R may represent a portion where the electrode assembly (a positive electrode plate, a negative electrode plate, and a separator) and electrolyte are accommodated, and the sealing portion E may represent a portion where the pouch exterior is fused to surround the accommodation portion R.

In particular, the pouch-type cell 100 may be regarded as having four sides (corners) centered on the accommodation portion R. At this time, all four sides may be configured in a sealed form, or only three sides may be configured in a sealed form. At this time, a cell in which four sides are sealed may be referred to as a four-side sealing cell, and a cell in which three sides are sealed may be referred to as a three-side sealing cell. For example, in the embodiment shown in FIGS. 3 and 4, the battery cell 100 is configured in an upright shape, and the front, rear, bottom, and top of the left pouch and the right pouch may be sealed. In this case, the battery cell 100 may be regarded as being on four sides.

A plurality of battery cells 100 may be included in the battery module. Also, each battery cell 100 may include an electrode lead 110. The electrode lead 110 includes a positive electrode lead and a negative electrode lead, and the positive electrode lead and the negative electrode lead may be provided to protrude on the same side (corner) or different sides of the battery cell 100. At this time, when the positive electrode lead and the negative electrode lead are located on the same side, the cell may be is referred to as a unidirectional cell, and when the positive electrode lead and the negative electrode lead are located on different sides, particularly on opposite sides, the cell may be referred to as a bidirectional cell.

The plurality of battery cells 100 may be included in the battery module in a stacked form. That is, it may be regarded that the battery module according to the present disclosure includes a cell stack (cell assembly) in which the plurality of battery cells are stacked in at least one direction. For example, as shown in FIG. 2, the plurality of battery cells 100 may be arranged side by side in a horizontal direction, for example in a left and right direction (Y-axis direction), in a state of being erected in an upper and lower direction (vertical direction, Z-axis direction). At this time, the electrode lead 110 of each battery cell 100 may be regarded as being disposed at both ends in the front and rear direction (X-axis direction).

The module case 200 has an empty space therein, and may be configured to accommodate the plurality of battery cells 100 in the inner space. For example, the module case 200 may include an upper plate 210, a lower plate 220, a left plate 230, a right plate 240, a front plate 250 and a rear plate 260 to define the inner space. In addition, it is possible that the cell stack is positioned in the defined inner space.

In addition, at least some of the various plate-shaped members constituting the module case 200 may be configured in an integrated form with each other. For example, the module case 200 may have a U-frame type body in which the lower plate 220, the left plate 230 and the right plate 240 are integrated with each other, as shown in FIG. 2, and the upper plate 210, the front plate 250 and the rear plate 260 may be configured to cover or seal the top, front and rear sides of the body. In this case, various fastening methods such as welding, bonding, bolting and hooking may be used for coupling and fixing the upper plate 210, the front plate 250 and the rear plate 260 to the body. Alternatively, the module case 200 may be configured in a mono frame form in which the upper plate 210, the lower plate 220, the left plate 230 and the right plate 240 are integrated with each other.

The module case 200 may be made of a heat-resistant material, particularly metal and/or plastic material. For example, the module case 200 may include various types of heat-resistant materials, such as clad metal, a metal or plastic material having a heat-resistant coating layer, and a form in which STS (SUS) and Al are bonded.

However, the present disclosure is not limited to a specific material or form of the module case 200.

The separation member 300 may be configured to divide a space between at least some battery cells 100 among the plurality of battery cells 100 accommodated in the module case 200. Moreover, the separation member 300 may divide the inner space of the module case 200 into a plurality of unit spaces. For example, the separation member 300 may be configured to divide the accommodation space for each of the plurality of battery cells 100. In this case, the plurality of battery cells 100 may be regarded as being accommodated in different divided spaces. As another example, the separation member 300 may be configured to separate two or more cell banks. Here, one or more battery cells 100 may be included in the cell bank. As a more specific example, the cell bank may include three battery cells 100. In this case, three battery cells 100 may be configured as one cell bank, and the separation member 300 divides the accommodation space for each each cell bank.

The separation member 300 may have a slot formed therein, as indicated by S in FIG. 2. The slot S may be configured such that the electrode lead 110 may be inserted therein. In particular, the slot S may be configured so that the electrode lead 110 located at an inner side may protrude outward through the separation member 300. For example, the slot S may have a shape and size corresponding to the insertion form of the electrode lead 110 so that the electrode lead 110 may be inserted or penetrated in the thickness direction of the separation member 300. More specifically, the electrode lead 110 may be formed in a roughly upright plate shape. In this case, the slot S may be configured to have a size greater than the length in the upper and lower direction (Z-axis direction) and the thickness in the left and right direction (Y-axis direction) of the electrode lead 110.

Meanwhile, unless otherwise specified herein, with respect to a specific component, the inner direction may refer to a direction toward the center of the corresponding component or the battery module, and the outer direction may refer to a direction toward the outside of the corresponding component or the battery module.

The insulation block 400 may have an electrical insulating material and may be configured to surround the electrode lead 110. In particular, the insulation block 400 may be configured to surround the outer side of a portion of the electrode lead 110 inserted into the slot S.

For example, referring to FIG. 3, the ends of the electrode leads 110 located at both ends in the front and rear direction (X-axis direction) of the battery cell 100 may be configured to extend in front and rear directions as indicated by L1 and bent in left and right directions as indicated by L2. Here, at least a part of the front and rear extension portion L1 may be a portion inserted into the slot S of the separation member 300, and the left and right bent portion L2 may be a portion drawn out from the slot S and located outside the separation member 300. In particular, the left and right bent portion L2 may be a portion in direct contact with an electrode lead of another battery cell 100 or in contact with a bus bar terminal of a bus bar assembly, explained later.

In this case, the insulation block 400 may be configured to surround a portion of the electrode lead 110 inserted into the slot S, namely the circumference of the front and rear extension portion L1. For example, the insulation block 400 may be configured to surround the electrode lead 110 in all of upper, lower, left and right directions except for the extension direction, namely in 360 degree (°) direction, with respect to a part of the front and rear extension portion L1 of the electrode lead 110.

The insulation block 400 may be made of or include various insulating materials known at the time of filing of this application, as a material having an electrical insulating property. In addition, the insulation block 400 may be made of or include a material having heat resistance so as to withstand high temperatures or flames to some extent. As a more specific example, the insulation block 400 may be made of or include materials heat-resistant plastic or heat resistance-treated (with ceramic or the like) treated elastomers, such as heat resistance-coated silicone, rubber, or polymers.

According to this embodiment of the present disclosure, the accommodation spaces of the battery cells 100 are separated inside the battery module, so that the transfer of flame, heat, sparks, and other foreign substances between adjacent battery cells 100 may be effectively blocked. Accordingly, even when an event such as thermal runaway occurs in a specific battery cell 100, propagation of such a thermal event to other battery cells 100 may be prevented.

The separation member 300 may have a metal material. For example, the separation member 300 may be made of a metal material. Alternatively, the separation member 300 may further include other materials together with the metal material.

As a more specific example, the separation member 300 may be made of steel, more specifically stainless steel (SUS, STS). As another example, the separation member 300 may be formed of a clad metal material, a heat resistance-coated metal material, and/or a material in which aluminum is bonded to an STS material.

According to this embodiment of the present disclosure, the separation member 300 may be easily manufactured, and high structural stability and mechanical strength may be secured. In particular, according to this embodiment, even if a flame or the like occurs inside the battery module, durability against such a flame is stably secured, so that structural collapse may be prevented and excellent flame blocking performance may be secured.

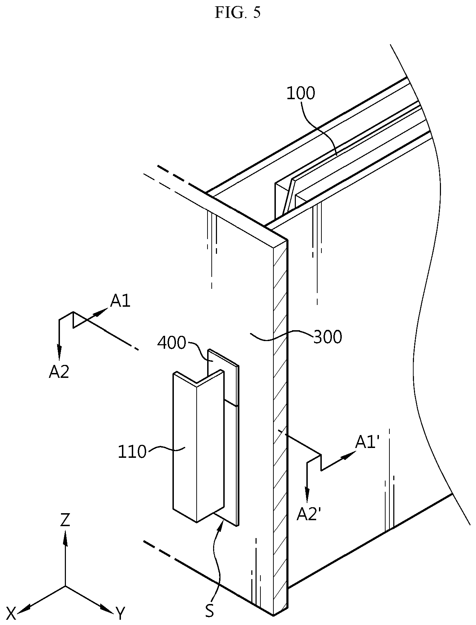

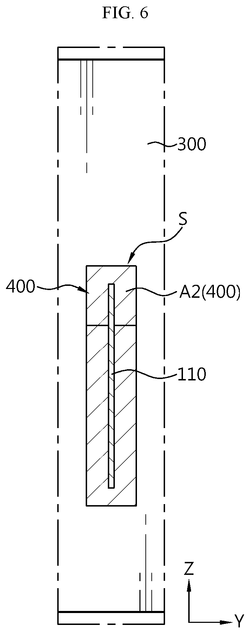

The insulation block 400 may be configured to electrically insulate the electrode lead 110 and the separation member 300 from each other. This will be described in more detail with reference to FIGS. 5 and 6.

FIG. 5 is a diagram schematically showing some components of the battery module according to an embodiment of the present disclosure. Also, FIG. 6 is a cross-sectional view, taken along line A1-A1' in FIG. 5. For example, FIGS. 5 and 6 may be regarded as views showing a part of the front side of one battery cell 100 in the battery module.

Referring to FIGS. 5 and 6, the insulation block 400 may be configured to electrically insulate the electrode lead 110 and the separation member 300 from each other by preventing the electrode lead 110 from directly contacting the separation member 300. In particular, the insulation block 400 may be configured to surround the circumference of a portion of the electrode lead 110 passing through the slot S of the separation member 300.

In this embodiment of the present disclosure, the electrode lead 110 may be prevented from contacting the separation member 300, particularly the slot S of the separation member 300. Accordingly, it is possible to prevent the electrode lead 110 and the separation member 300 from being electrically connected. In particular, the separation member 300 may be made of a metal material having electrical conductivity in order to secure stability against flame and structural rigidity. At this time, since the insulation block 400 blocks direct contact between the electrode lead 110 and the separation member 300 as in this embodiment, it is possible to prevent the occurrence of a short circuit and ensure electrical safety.

In addition, the insulation block 400 may be configured to seal the slot S. The separation member 300 may have a slot S formed so that the electrode lead 110 can be inserted. The slot S may be formed larger than an insertion size (sectional size) of the electrode lead 110 in consideration of tolerance so that the electrode lead 110 may be easily inserted. Accordingly, in a state where the electrode lead 110 is inserted into the slot S, an empty space may be formed around the electrode lead 110. However, as indicated by A2 in FIG. 6, the insulation block 400 may be filled around the electrode lead 110 in the slot S.

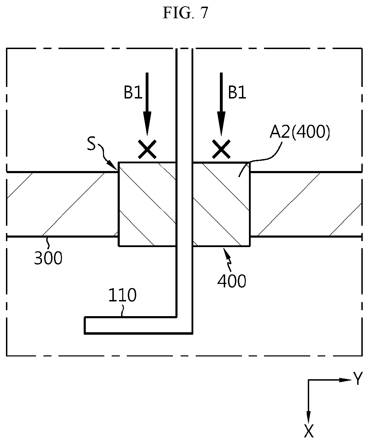

According to this embodiment of the present disclosure, emission of flame, spark, or the like through the slot S may be suppressed. This will be described in more detail with further reference to FIG. 7.

FIG. 7 is a top view showing some components of the battery module according to an embodiment of the present disclosure. For example, FIG. 7 may be regarded as showing a cross-sectional configuration, taken along line A2-A2' of FIG. 5.

Referring to FIG. 7, when a flame, spark, venting gas, or the like are generated at the pouch exterior of the battery cell 100, especially at the sealing portion E, the flame may move toward the slot S from the inside of the separation member 300, as indicated by arrow B1. However, the space in the slot S of the separation member 300 other than the portion where the electrode lead 110 is inserted may be sealed by the insulation block 400. In particular, the insulation block 400 may be configured to completely block the empty space of the slot S except for the electrode lead 110 in the slot S of the separation member 300. Therefore, the flame, spark, or the like cannot pass through the slot S and may stay only in the inner space of the separation member 300, namely the space where the corresponding battery cell 100 is accommodated.

Therefore, according to this embodiment, the propagation of thermal runaway propagation due to a flame or the like passing through the slot S may be prevented more reliably. For example, in this embodiment, the propagation of flame, spark, high-temperature gas, or the like between the battery cells 100 through the space where the electrode lead 110 is located, particularly through the front or rear side of the battery module, may be blocked. Therefore, in this case, the safety of the battery module may be further improved.

Moreover, the insulation block 400 may have an elastic material in order to secure the sealing force for the slot S. For example, the insulation block 400 may have a material such as polyurethane, rubber, or silicone. In addition, the insulation block 400 may have a plastic or polymer material having elasticity of a certain level or higher. Moreover, the insulation block 400 may include a ceramic coating layer to improve heat resistance. For example, the insulation block 400 may have a material such as zirconia or mica. The present disclosure is not limited to a specific material of the insulation block 400, and various materials having electrical insulation, heat resistance, or elasticity known at the time of filing of this application may be employed for the insulation block 400.

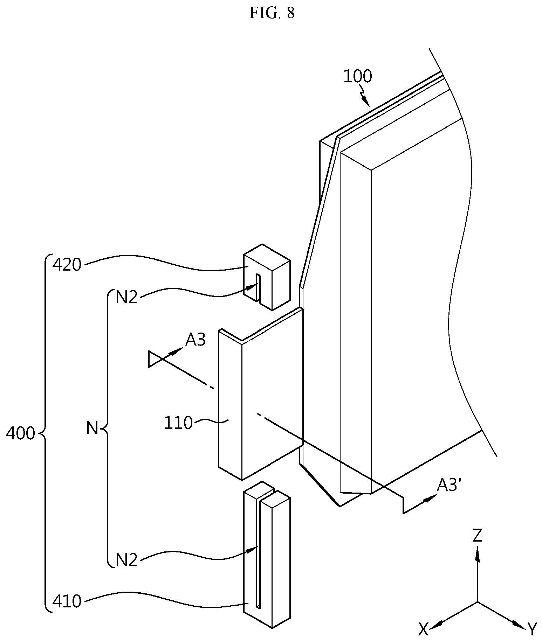

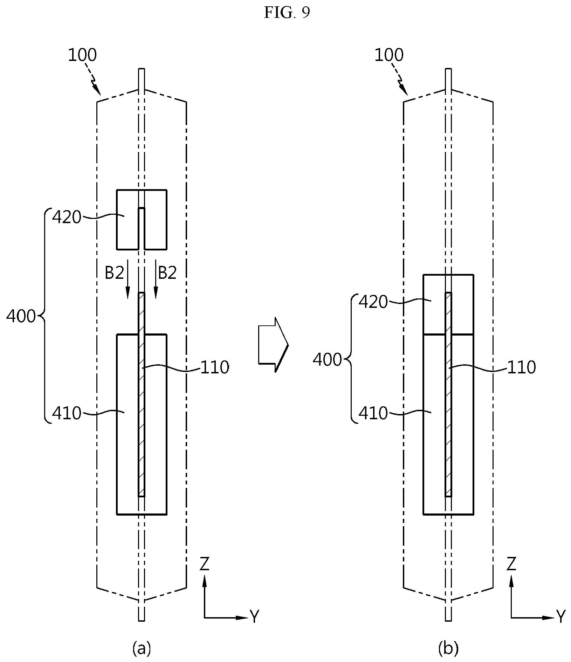

FIG. 8 is an exploded perspective view schematically showing the configuration of an insulation block 400 according to an embodiment of the present disclosure. FIG. 9 is a cross-sectional view schematically showing the configuration in which the insulation block 400 is assembled to the electrode lead 110 in the battery module according to an embodiment of the present disclosure.

Referring to FIGS. 8 and 9, the insulation block 400 may include two or more unit blocks. Also, the plurality of unit blocks may be configured to be coupled with each other. For example, as shown in FIGS. 8 and 9, the insulation block 400 may include a first block 410 and a second block 420. Also, the first block 410 and the second block 420 may be coupled to form one unit block and inserted into one slot S.

A lead insert portion into which the electrode lead 110 is inserted may be formed in the insulation block 400, as indicated by N in FIGS. 3 and 8. In particular, the lead insert portion N may be in a slit form elongated in the upper and lower direction (Z-axis direction) to correspond to the shape of the electrode lead 110. In particular, the lead insert portion N may be formed in at least one of the first block 410 and the second block 420. For example, as shown in FIG. 8, a first slit N1 and a second slit N2 may be formed in the first block 410 and the second block 420, respectively. In this case, when the first block 410 and the second block 420 are coupled, one lead insert portion N may be formed by coupling the first slit N1 and the second slit N2.

More specifically, the first block 410 and the second block 420 may be coupled with each other in the upper and lower directions. For example, as indicated by arrow B2, the second block 420 may move downward at a location above the first block 410 and be seated on the top of the first block 410. Here, the first slit N1 may be formed to be elongated downward from the top of the first block 410 by a predetermined distance. In addition, the second slit N2 may be formed to be elongated upward from the bottom of the second block 420 by a predetermined distance. Moreover, the lead insert portion N may be formed to be cut or sectioned from the insulation block 400.

According to this embodiment of the present disclosure, the insulation block 400 and the electrode lead 110 may be assembled more easily. For example, according to this embodiment, as shown in (a) of FIG. 9, the electrode lead 110 may be first inserted into the first slit N1 of the first block 410. In addition, while matching the upper portion of the electrode lead 110 protruding upward from the first slit N1 to the second slit N2, the second block 420 may be moved downward as indicated by arrow B2. Then, as shown in (b) of FIG. 9, the second block 420 and the first block 410 may be coupled to each other. Therefore, the configuration surrounding the electrode lead 110 by the insulation block 400 may be easily achieved. Also, according to this embodiment, the sealing between the insulation block 400 and the electrode lead 110 may be improved. That is, according to this embodiment, since the electrode lead 110 may be easily inserted into the lead insert portion N of the insulation block 400, the size of the lead insert portion N may not be increased. Therefore, it is possible to minimize the gap created between the electrode lead 110 and the insulation block 400.

In this embodiment, the plurality of unit blocks may be coupled to each other by various fastening methods such as bonding, bolting, welding, fitting, and hooking. For example, an adhesive may be applied to the top surface of the first block 410 and the bottom surface of the second block 420 so that the first block 410 and the second block 420 may be adhesively fixed to each other. As another example, the first block 410 and the second block 420 may be fastened and fixed by fitting protrusions and fastening grooves formed to correspond to each other.

According to this embodiment of the present disclosure, a coupling state between the plurality of unit blocks may be stably maintained. Therefore, the insulation and sealing performance of the electrode lead 110 by the insulation block 400 may be secured more stably.

In addition, the insulation block 400 may be detachably configured with respect to the electrode lead 110. That is, the insulation block 400 may be configured to be coupled to and separated from the electrode lead 110. For example, the insulation block 400 may be mounted to the electrode lead 110 by fitting between the first block 410 and the second block 420. In addition, the insulation block 400 may be separated or detached from the electrode lead 110 by releasing the fitting between the first block 410 and the second block 420.

According to this embodiment of the present disclosure, the process of separating a specific battery cell 100 from the battery module as well as the process of assembling the battery module may be more easily performed. Accordingly, the battery module may be assembled or replaced more easily.

The insulation block 400 may be included in plurality in the battery module. For example, two or more slots S for protruding two electrode leads 110 may be formed in the battery cell 100. Moreover, the battery module may include a plurality of battery cells 100, and slots S corresponding to electrode leads 110 of the battery cells 100 may also be formed in plurality in the separation member 300. In this case, the insulation block 400 may also be included in plurality to correspond to the plurality of slots S, respectively. For example, when several slots S are formed in the separation member 300 included in one battery module, a plurality of insulation blocks 400 may be included to correspond to the slots S in one-to-one relationship.

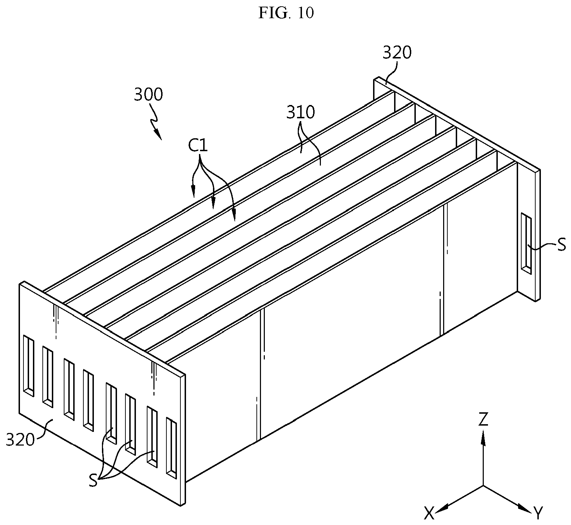

FIG. 10 is a perspective view schematically showing the configuration of a separation member 300 included in the battery module according to an embodiment of the present disclosure.

Referring to FIG. 10, the separation member 300 may include a first separation portion 310 and a second separation portion 320.

The first separation portion 310 may be interposed between adjacent battery cells 100. For example, referring to FIG. 2 along with FIG. 10, the plurality of battery cells 100 may be arranged side by side in left and right directions. At this time, each battery cell 100 may be arranged so that the electrode lead 110 is located in the front and rear directions in a standing state. In this case, the first separation portion 310 may be interposed between two battery cells 100 disposed adjacently in left and right directions. That is, the first separation portion 310 may be interposed between the cell stacks to divide the space between the cell stacks.

More specifically, the first separation portion 310 may form a plurality of separated spaces as indicated by C1. Moreover, the first separation portion 310 may be disposed in plurality to be spaced apart from each other by a predetermined distance in a horizontal direction (left and right direction). In addition, one or more battery cells 100 may be accommodated in the separated space between the first separation portions 310.

The second separation portion 320 may be connected to an end of the first separation portion 310. Moreover, the second separation portion 320 may be provided at the side where the electrode lead 110 is located. For example, as shown in FIG. 10, the second separation portion 320 may be connected to a front end or a rear end of the first separation portion 310 where the electrode lead 110 is located. In particular, two or more second separation portions 320 may be provided, at least one of which may be connected to the front end of the first separation portion 310 and the other one of which may be connected to the rear end of the first separation portion 310.

Also, the second separation portion 320 may have a slot S formed therein. That is, the slot S may be formed in the second separation portion 320 so that the electrode lead 110 is inserted. At this time, the slot S may be formed to penetrate the second separation portion 320 in the thickness direction.

The first separation portion 310 may be configured to separate two battery cells 100 in the stacking direction of the cell stack, for example in the left and right directions. Also, the second separation portion 320 may be configured to separate the cell stack from the space at the front side or the space at the rear side.

According to this embodiment, by the separation member 300, it is possible to effectively prevent not only a flame, spark, heat, or the like from being directly transferred between cells in the stacking direction of the battery cell 100, but also the flame or the like from detouring through the space at the front or rear side of the battery cell 100. Therefore, in this case, the heat propagation suppression performance between the battery cells 100 may be further improved.

The first separation portion 310 and/or the second separation portion 320 may be formed in a plate shape. For example, as shown in FIG. 10, the plurality of first separation portions 310 and two second separation portions 320 may be all configured in a rectangular plate shape. In addition, each plate constituting the first separation portion 310 and the second separation portion 320 may be configured in a rectangular plate form. Moreover, both the first separation portion 310 and the second separation portion 320 may be formed in an upright plate form.

According to this embodiment of the present disclosure, it is possible to reliably divide the space between cells in the inner space of the module case 200, while reducing the size or thickness of the separation member 300. In particular, by ensuring that the end of the separation member 300, for example the top or bottom thereof, is in close contact with the inner surface of the module case 200, it is possible to prevent a flame, gas, spark, heat, or the like from leaking through the gap between the separation member 300 and the module case 200. In addition, in this case, by reducing the space occupied by the separation member 300, it is possible to increase the energy density of the battery module, while contributing to lightening the battery module.

The first separation portion 310 and the second separation portion 320 may be formed to be coupled perpendicularly. For example, the first separation portion 310 is a standing plate, and may be disposed to be elongated in the front and rear direction (X-axis direction). Also, the second separation portion 320 is a standing plate, and may be disposed to be elongated in the left and right direction (Y-axis direction). **In** this case, the first separation portion 310 and the second separation portion 320 may be regarded as being coupled to each other such that their extension directions are perpendicular to each other.

According to this embodiment of the present disclosure, the accommodation space of the battery cell 100 may be secured as much as possible by reducing the volume or weight of the separation member 300. Therefore, it may be advantageous to improve the energy density of the battery module. Also, according to this embodiment, the separation member 300 may be assembled easily, and the separation member 300 and the battery cell 100 may be easily assembled. Thus, the process of manufacturing the battery module may be performed more efficiently. Also, according to this embodiment, the structural rigidity of the separation member 300 may be secured more stably.

For example, the first separation portion 310 and the second separation portion 320 may be manufactured separately and then assembled with each other. In this case, the first separation portion 310 may be repeatedly stacked together with the battery cell 100 in a horizontal direction, for example in the left and right direction, to form a composite stack. Also, after the composite stack is formed, different second separation portions 320 may be coupled to the ends of the first separation portion 310, for example the front and rear ends thereof.

At this time, the first separation portion 310 and the second separation portion 320 may be coupled with each other by various fastening methods. For example, the first separation portion 310 and the second separation portion 320 may be coupled and fixed to each other by welding. Alternatively, the first separation portion 310 and the second separation portion 320 may be coupled and fixed by fitting or the like. In particular, in order to improve the fastening properties of the first separation portion 310 and the second separation portion 320, the first separation portion 310 may be disposed to protrude in the front and rear direction rather than the battery cell 100 in a state where the composite stack is formed together with the battery cell 100. Also, the protruding portion of the first separation portion 310 may be brought into contact with and coupled to the second separation portion 320.

Meanwhile, a slot S may be formed in the second separation portion 320 so that the electrode lead 110 penetrates when being coupled with the first separation portion 310. At this time, the second separation portion 320 may move toward the battery cell 100 at the front or rear side of the first separation portion 310 and be coupled with the first separation portion 310.

According to this embodiment of the present disclosure, when a composite stack is formed by stacking the first separation portion 310 and the battery cell 100, the first separation portion 310 and the battery cell 100 may be brought into close contact as much as possible. Accordingly, as the dead space is reduced, the energy density of the battery module may be further improved.

As another example, the first separation portion 310 and the second separation portion 320 may be manufactured integrally with each other. That is, the first separation portion 310 and the second separation portion 320 may be manufactured in an integrated form, instead of being manufactured separately and then coupled. For example, the first separation portion 310 and the second separation portion 320 may be manufactured as shown in FIG. 10 from the beginning.

According to this embodiment of the present disclosure, since the separation member 300 is easily manufactured, the productivity or process efficiency for the battery module may be improved. Also, in this case, since the first separation portion 310 and the second separation portion 320 are integrated from the beginning and maintain a coupled state, excellent structural rigidity and stability of the separation member 300 may be secured.

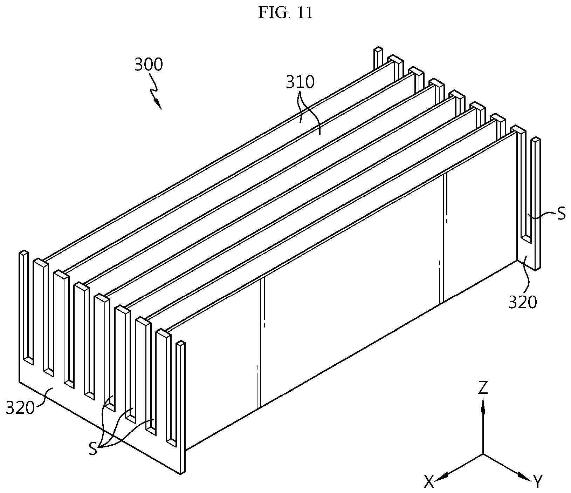

FIG. 11 is a perspective view schematically showing the configuration of a separation member 300 included in a battery module according to another embodiment of the present disclosure.

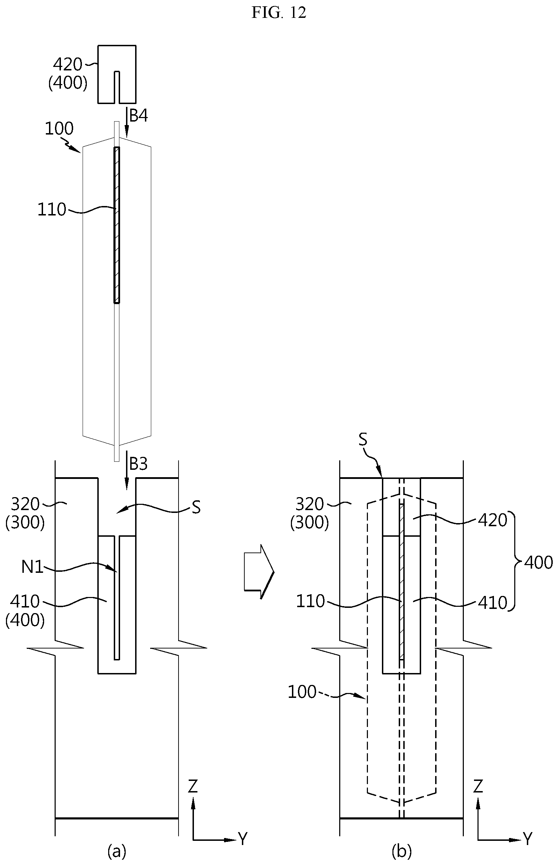

Referring to FIG. 11, the slot S may be provided by cutting or sectioning a part of the separation member 300. More specifically, the slot S may be formed in a shape cut downward by a predetermined distance from the upper end of the second separation portion 320. In addition, the electrode lead 110 and the insulation block 400 surrounding the electrode lead 110 may be inserted into the slot S formed in a cut shape. This will be described in more detail with further reference to FIG. 12.

FIG. 12 is a front cross-sectional view schematically showing the configuration in which the electrode lead 110 and the insulation block 400 are inserted into the slot S formed in the separation member of FIG. 11. In particular, (a) of FIG. 12 is a diagram showing the process of inserting the electrode lead 110 and the insulation block 400 into the slot S, and (b) of FIG. 12 is a diagram schematically showing the cross-sectional configuration after the electrode lead 110 and the insulation block 400 are inserted into the slot S.

Referring to (a) of FIG. 12 along with FIG. 11, since the slot S is formed in a shape cut downward from the upper end of the separation member 300, the electrode lead 110 and the insulation block 400 may be drawn downward at the top opening of the slot S and inserted into the slot S.

In this embodiment, the insulation block 400 may include two unit blocks, as described above in the embodiment of FIGS. 8 and 9. In this case, in a state where the first block 410 is first inserted into the slot S of the second separation portion 320, the battery cell 100 may move downward as indicated by arrow B3, so that the electrode lead 110 is inserted into the slot S of the second separation portion 320 and the first slit N1 of the first block 410. In addition, if the battery cell 100 is accommodated in the inner separated space of the separation member 300 so that the electrode lead 110 is inserted into the slot S and the first slit N1, the second block 420 may move downward as indicated by arrow B4 and be inserted into the slot S of the second separation portion 320. At this time, the electrode lead 110 of the battery cell 100 may be inserted into the second slit N2 of the second block 420.

According to this embodiment of the present disclosure, the assembling property or the process efficiency for the battery module may be further improved. In particular, according to this embodiment, in a state where the first separation portion 310 and the second separation portion 320 are coupled to each other, or even when they are manufactured in a form integrated with each other, the battery cell 100 may be easily accommodated in the accommodation space C1 by moving in one direction, for example in a lower direction. Therefore, the accommodation process for the battery cell 100 may be performed more easily. Also, according to this embodiment, the configuration in which the insulation block 400 is coupled to the slot S of the separation member 300 may be more easily achieved.

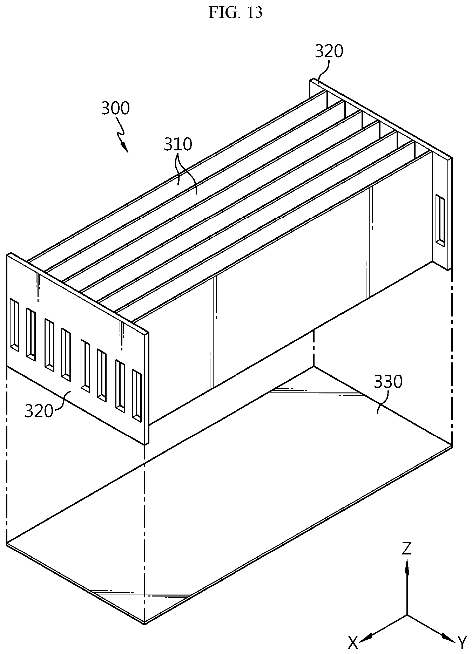

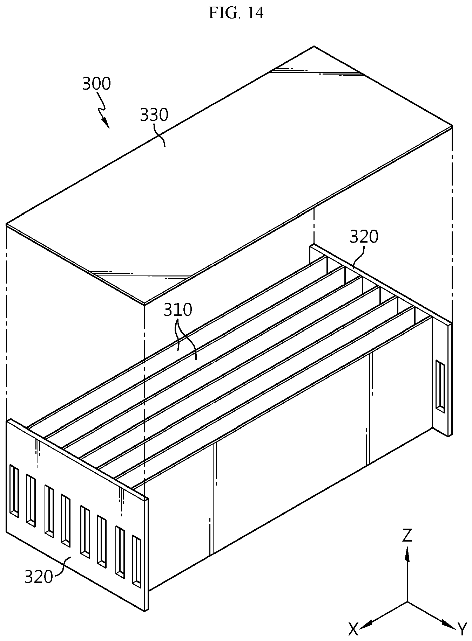

FIGS. 13 and 14 are exploded perspective views schematically showing the configuration of a separation member 300 included in a battery module according to still other embodiments of the present disclosure.

Referring to FIGS. 13 and 14, the separation member 300 may further include a third separation portion 330. Here, the third separation portion 330 may be connected to the end of each of the first separation portion 310 and the second separation portion 320. For example, as shown in FIG. 13, the third separation portion 330 may be connected to lower ends of the first separation portion 310 and the second separation portion 320. As another example, as shown in FIG. 14, the third separation portion 330 may be connected to upper ends of the first separation portion 310 and the second separation portion 320.

The third separation portion 330 may be configured in a plate shape, like the first separation portion 310 and the second separation portion 320. However, unlike the first separation portion 310 or the second separation portion 320, the third separation portion 330 may be configured to lie down in a horizontal direction. In particular, the third separation portion 330 may be configured in a plate form parallel to the X-Y plane. Moreover, the third separation portion 330 may be formed in a plate shape orthogonal to the first separation portion 310 and the second separation portion 320. That is, the plane formed by the third separation portion 330 may have a shape orthogonal to the plane formed by the first separation portion 310 and the second separation portion 320.

According to this embodiment of the present disclosure, the structures of the first separation portion 310 and the second separation portion 320 may be more stably maintained by the third separation portion 330. Accordingly, the structure of the separation member 300 may be stably maintained without changing even in the event of an external shock or an internal pressure change. In particular, when gas, flame, spark, or the like is generated in the battery cell 100 due to an event such as thermal runaway, strong pressure may be applied toward the separation member 300. At this time, structural collapse of the separation member 300 may be suppressed due to the third separation portion 330, and an inter-cell isolation effect by the separation member 300 may be more stably secured.

Also, according to this embodiment, since the lower end or upper end of the battery cell 100 may be seated on the third separation portion 330, the battery cell 100 may be stably accommodated in the inner space of the separation member 300. In particular, as in the embodiment of FIG. 13, when the third separation portion 330 is provided at the lower end of the battery cell 100, the battery cell 100 is seated at the top of the third separation portion 330 and thus may be stably accommodated.

Also, according to this embodiment, the isolation effect of the separation member 300 may be further improved. For example, in each battery cell 100, not only the propagation of flame, heat, or the like in the horizontal direction may be blocked by the first separation portion 310 and the second separation portion 320, but also the propagation of flame or the like in the upper and lower direction (vertical direction) may be blocked by the third separation portion 330. In particular, as in the embodiment of FIG. 14, when the third separation portion 330 is provided on the upper side of the battery cell 100, it is possible to block flame or the like from moving upward. Therefore, when the battery module is mounted at a lower side of a vehicle, it is possible to suppress the flame from being directed to the occupant located on the upper side, thereby improving the safety of the occupant.

Meanwhile, as shown in FIGS. 13 and 14, the third separation portion 330 may be coupled to only one of the upper end and the lower end of the first separation portion 310. In this case, it may be more advantageous to implement directional venting that induces a flame or venting gas generated in the battery cell 100 in a specific direction. Also, in this case, the process of accommodating the battery cell 100 in the accommodation space of the separation member 300 may be performed more easily.

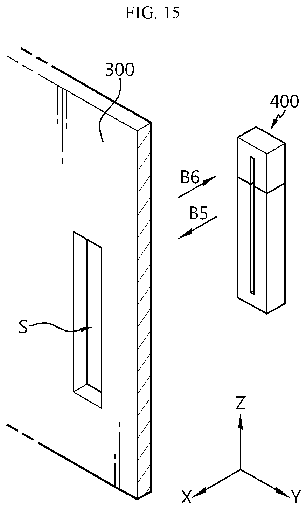

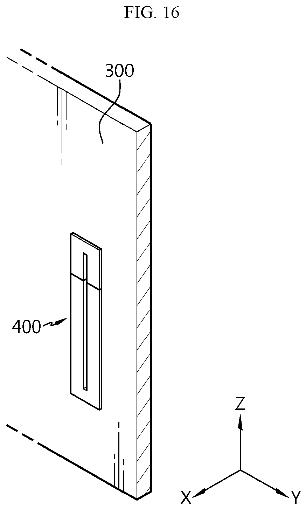

FIG. 15 is an exploded perspective view showing some components of a battery module according to an embodiment of the present disclosure. Also, FIG. 16 is a combined perspective view showing the configuration of FIG. 15. In particular, in FIGS. 15 and 16, as a part of the separation member 300, one slot S and one insulation block 400 coupled thereto are shown.

Referring to FIGS. 15 and 16, the insulation block 400 may be configured to be mountable to the slot S of the separation member 300. For example, the slot S of the separation member 300 may be formed in a hole shape as shown in FIG. 15, and at this time, the insulation block 400 may move as indicated by arrow B5 and be inserted and coupled into the slot S. Conversely, the insulation block 400 may be separated from the slot S by moving as indicated by arrow B6. That is, the insulation block 400 may be configured to be attachable to and detachable from the slot S of the separation member 300.

In this embodiment, the insulation block 400 may be configured to be fitted into the slot S of the separation member 300. For example, the insulation block 400 may have a structure or size corresponding to the shape of the slot S.

According to this embodiment of the present disclosure, the sealing structure may be easily provided for the slot S of the separation member 300. Also, according to this embodiment, the electrode lead 110 may be stably fixed to the slot S. Therefore, the bonding portion of the electrode lead 110 is prevented from being broken or damaged during use of the battery module, and the process for bonding the electrode lead 110 to a bus bar may be performed more easily.

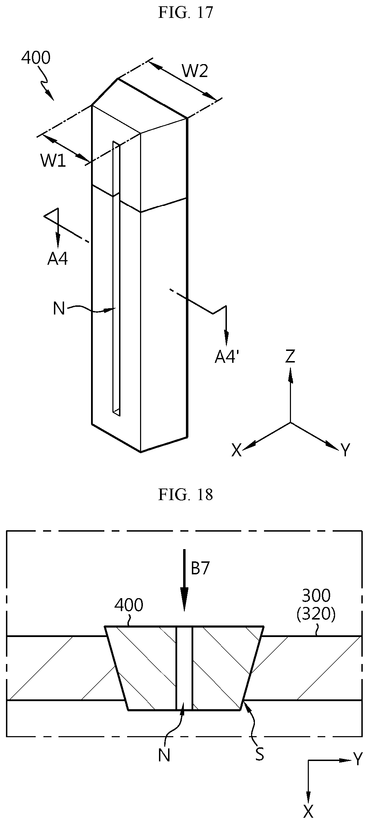

FIG. 17 is a perspective view schematically showing the configuration of an insulation block 400 according to another embodiment of the present disclosure. FIG. 18 is a cross-sectional view schematically showing the configuration in which the insulation block 400 of FIG. 17 is mounted in the slot S of the separation member 300. For example, FIG. 18 may be regarded as showing a cross-sectional configuration, taken along line A4-A4', in a state where the insulation block 400 of FIG. 17 is mounted in the slot S.

First, referring to FIG. 17, the insulation block 400 may be configured to have different sizes at both ends located on the opposite sides. In particular, the insulation block 400 may be configured to have different sizes at the outer end and the inner end. For example, when the insulation block 400 shown in FIG. 17 is configured to be coupled to the electrode lead 110 located at the front side of the battery cell 100, namely when the insulation block 400 is a front insulation block 400, the width of the outer end of the insulation block 400 may be represented by W1. Also, the width of the inner end of the insulation block 400 may be represented by W2. In this case, W1 may be formed to have a smaller size than W2.

Also, the slot S of the separation member 300 may have a shape and size corresponding to the shape of the insulation block 400. For example, seeing the embodiment of FIG. 18, the slot S of the separation member 300 but may be formed to penetrate the separation member 300 in the front and rear direction (Y-axis direction) and correspond to the shape of the insulation block 400. In particular, the size of the outer opening of the slot S may be approximately similar to the size W1 of the outer end of the insulation block 400, and the size of the inner opening of the slot S may be approximately similar to the size W2 of the inner end of the insulation block 400. Accordingly, the slot S may be formed such that the outer portion has a smaller size than the inner portion.

According to this embodiment of the present disclosure, the insulation block 400 may not be separated from the slot S of the separation member 300 but may stably maintain its position in an emergency situation such as thermal runaway. For example, when a flame, venting gas, or the like is ejected from the battery cell 100 located inside the insulation block 400, as indicated by arrow B7 in FIG. 18, a pressure may be applied outward toward the insulation block 400. At this time, since the size (width) of the inner end of the slot S is smaller than the size (width) of the outer end of the insulation block 400, the insulation block 400 may not be easily deviated in the outer direction from the slot S (+X-axis direction) in spite of the force applied as indicated by arrow B7. Also, in this case, since the insulation block 400 and the separation member 300 are stably coupled, the electrode lead 110 surrounded by the insulation block 400 may also stably maintain its position.

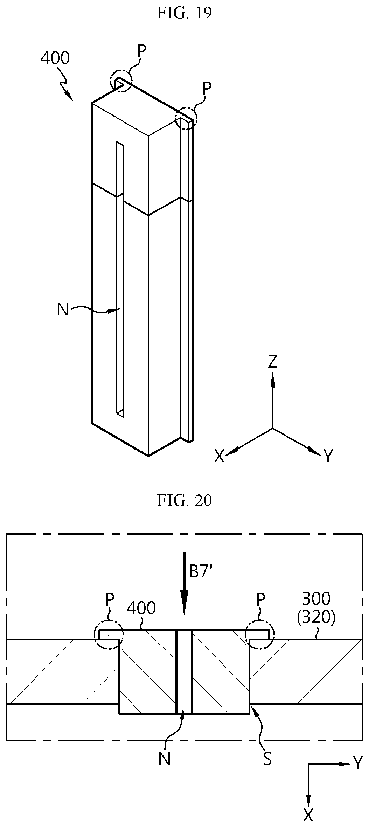

FIG. 19 is a perspective view schematically showing the configuration of an insulation block 400 according to still another embodiment of the present disclosure. FIG. 20 is a cross-sectional view schematically showing the configuration in which the insulation block 400 of FIG. 19 is mounted in the slot S of the separation member 300.

Referring to FIGS. 19 and 20, the insulation block 400 may include a stopper formed at an inner end located near the accommodation portion R of the battery cell 100, as indicated by P. The stopper P may be formed to protrude in the left and right direction (Y-axis direction) from the insulation block 400, and may be a portion having the largest width in the left and right direction. Moreover, the stopper P may be configured to be larger than the size of the slot S. In this case, as shown in FIG. 20, when the insulation block 400 is inserted into the slot S of the separation member 300, the stopper P may be seated on the inner surface of the separation member 300 without being inserted into the slot S.

According to this embodiment of the present disclosure, even if a flame, gas, or the like is generated from the battery cell 100 in a situation such as thermal runaway so that a pressure is applied as indicated by arrow B7', it is possible to certainly prevent the insulation block 400 from escaping to the outside of the slot S. Accordingly, the coupling between the insulation block 400 and the separation member 300 may be improved, and movement or damage of the electrode lead 110 may be prevented.

The battery module according to the present disclosure may further include a bus bar assembly 500 as shown in FIG. 2.

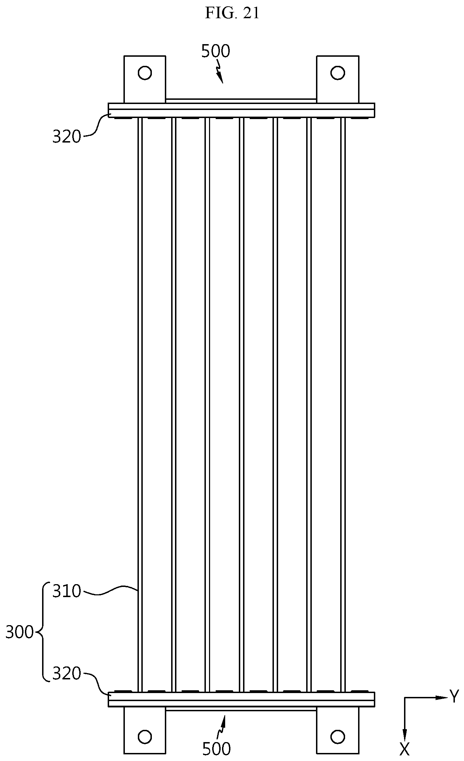

The bus bar assembly 500 may be configured to electrically connect the electrode leads 110 of the plurality of battery cells 100 to each other. In particular, the bus bar assembly 500 may be located outside the separation member 300. This will be described in more detail with reference to FIG. 21.

FIG. 21 is a top view schematically showing some components of the battery module according to an embodiment of the present disclosure. In particular, in FIG. 21, a separation member 300 and a bus bar assembly 500 are shown.

Referring to FIG. 21, the bus bar assembly 500 may be provided outside the separation member 300. More specifically, the bus bar assembly 500 may be disposed on the front side (+X direction side) and the rear side (-X direction side) of the separation member 300, respectively. In particular, the separation member 300 may have a second separation portion 320 at the front side and the rear side, respectively. In addition, the bus bar assembly 500 may be located at the outer side of the second separation portion 320, more specifically at the front side of the second front separation portion and the rear side of the second rear separation portion, respectively. In particular, the bus bar assembly 500 may be attached to the outer surface of the second separation portion 320.

According to this embodiment of the present disclosure, the bus bar assembly 500 may be safely protected even from the flame, gas, or the like ejected from the battery cell 100. That is, the battery cell 100 may be located at the inner side of the separation member 300, particularly at the inner side of the second separation portion 320, and eject a flame, venting gas, or the like. At this time, since the bus bar assembly 500 is located at the outer side of the separation member 300, particularly the second separation portion 320, it is possible to suppress the bus bar assembly 500 from being directly influenced from the flame or the like. Therefore, it is possible to prevent the bus bar assembly 500 from being damaged or structurally collapsing due to a flame, heat, or the like. Therefore, it is possible to ensure electrical safety by protecting components for electrical connection inside the battery module from a flame or the like.

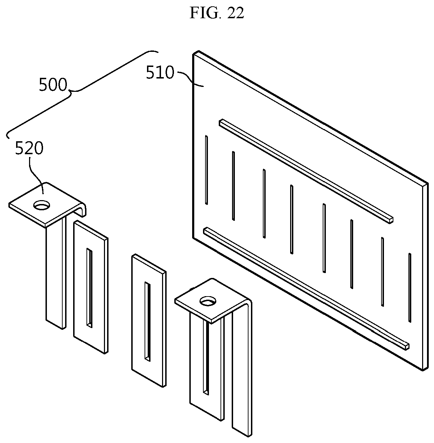

FIG. 22 is an exploded perspective view schematically showing the configuration of a bus bar assembly 500 according to an embodiment of the present disclosure.

Referring to FIG. 22, the bus bar assembly 500 may include a bus bar housing 510 and a bus bar terminal 520.

The bus bar housing 510 may be made of an electrical insulating material, such as a plastic material. Also, the bus bar housing 510 may be located outside the separation member 300. For example, the bus bar housing 510 may be coupled and fixed to the front surface or the rear surface of the separation member 300. At this time, the bus bar housing 510 and the separation member 300 may be coupled by various fastening methods such as bolting, hooking, adhesion, and welding.

The bus bar terminal 520 may be made of an electrically conductive material, such as a metal material. In addition, the bus bar terminal 520 may be configured to electrically connect two or more electrode leads 110 or be connected to one or more electrode leads 110 to transmit sensing information such as cell voltage to a control unit such as a BMS (Battery Management System). To this end, the bus bar terminal 520 may be fixed in contact with the electrode lead 110 by welding or the like.

The bus bar terminal 520 may be coupled to the bus bar housing 510. To this end, the bus bar housing 510 may be configured such that the bus bar terminal 520 is seated and fixed. For example, the bus bar housing 510 may have a seating groove in which the bus bar terminal 520 may be seated. The bus bar terminal 520 may be coupled and fixed to the bus bar housing 510 in various ways such as bolting, riveting, and bonding.

According to this embodiment of the present disclosure, the bus bar terminal 520 may be more reliably protected from flames. In addition, according to this embodiment, since direct contact between the bus bar terminal 520 and the separation member 300 is prevented, electrical insulation between them may be secured. In particular, the separation member 300 may be made of a metal material having electrical conductivity in order to secure structural stability against flame, and according to this embodiment, electrical insulation between the separation member 300 and the bus bar terminal 520 may be stably secured.

Also, according to this embodiment, it is possible to suppress the heat applied from the inside of the separation member 300 from being transferred toward the bus bar terminal 520. Therefore, it is possible to prevent heat transfer between cells through the bus bar terminal 520.

In particular, the bus bar terminal 520 may be provided to the outer side of the bus bar housing 510. For example, in the case of the front side bus bar housing 510, the bus bar terminal 520 may be attached to the front surface of the bus bar housing 510. As another example, in the case of the rear side bus bar housing 510, the bus bar terminal 520 may be attached to the rear surface of the bus bar housing 510.

In this case, electrical safety may be enhanced by securely separating the bus bar terminal 520 and the separation member 300 from each other and preventing the bus bar terminal 520 and the separation member 300 from directly contacting each other.

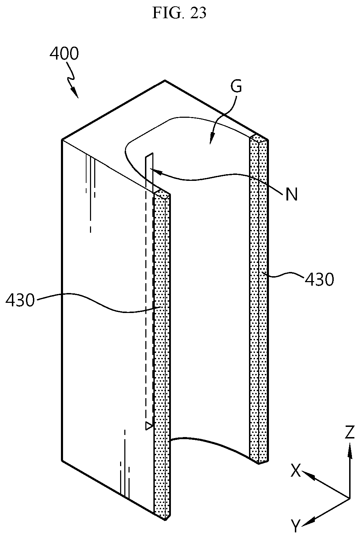

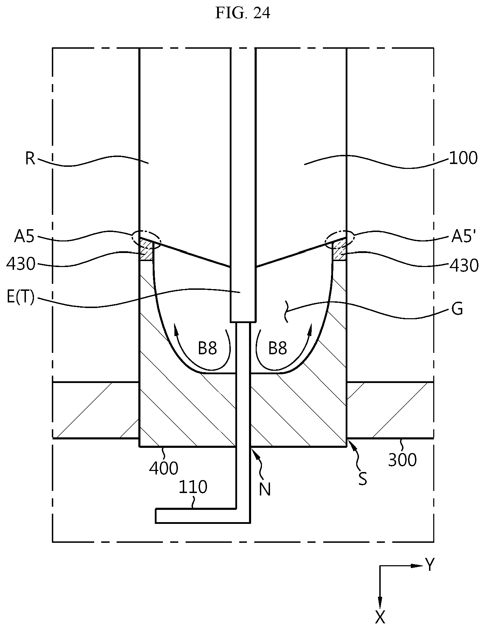

FIG. 23 is a perspective view schematically showing the configuration of an insulation block 400 according to still another embodiment of the present disclosure. In particular, FIG. 23 may be regarded as showing the insulation block 400 viewed from the inside where the accommodation portion R of the battery cell 100 is located. Also, FIG. 24 may be a top view showing a cross-sectional configuration of a part of the battery module including the insulation block 400 of FIG. 23.

Referring to FIGS. 23 and 24, the insulation block 400 may have a gas collecting portion, as indicated by G. The gas collecting portion G may be configured such that when gas is discharged from the battery cell 100, the discharged gas is introduced and retained therein. In particular, when an event such as thermal runaway occurs in the battery cell 100 to increase the internal pressure, a gas, flame, spark, or the like is often discharged to the outside. At this time, the gas collecting portion G may be configured such that the discharged gas, flame, spark, or the like is introduced and retained therein.

To this end, the gas collecting portion G may be formed in a concave shape toward the outside on the inner surface of the insulation block 400. For example, in the insulation block 400 located on the front side of the battery cell 100, the rear end may be formed concave toward the front side. Also, in the concave space, a flame, spark, or the like may be collected.

According to this embodiment, heat propagation between cells due to external emission of a flame, spark, or the like may be prevented more reliably. For example, referring to FIG. 24, even if a flame, spark, or the like is ejected from the battery cell 100, the ejected flame or the like may flow only in the inner space of the gas collecting portion G, as indicated by arrow B8. That is, in this embodiment, such an ejected material is collected in the gas collecting portion G, and it is possible to block discharge of the ejected material to the outside of the insulation block 400.

In addition, according to this embodiment, a venting gas, flame, or the like is induced to exist only in a predetermined area, which is more advantageous for directional venting.

In addition, a small amount of gas may be generated when the battery cell 100 is used even in a normal situation, not in an abnormal situation such as a thermal runaway. According to this embodiment, such a small amount of gas may be collected. In this case, it may contribute to an increase in lifespan of the battery cell 100.

The insulation block 400 may be configured in various shapes to form the gas collecting portion G. For example, as shown in FIGS. 23 and 24, the insulation block 400 may have a portion where the thickness decreases toward the inside at which the accommodation portion R of the battery cell 100 is located. In addition, the gas collecting portion G of the insulation block 400 may have a portion where the width in the left and right direction gradually increases toward the inside. For example, the gas collecting portion G may be formed in an arch shape at the inner side of the insulation block 400. In addition, in order to form the gas collecting portion G, the insulation block 400 may have an inclined portion or an inclined surface on the inner surface.

In addition, the insulation block 400 may be configured to surround at least a part of the sealing portion E of the battery cell 100.

For example, referring to FIG. 24, the battery cell 100 may have a sealing portion E, in particular a terrace portion T in which an electrode lead 110 protrudes. In this case, the insulation block 400 may be configured to cover the sealing portion E, namely the terrace portion T. Moreover, in the insulation block 400, as described above, the gas collecting portion G may be formed in a concave shape. Also, by the gas collecting portion G, the insulation block 400 may surround the terrace portion T to be spaced apart therefrom by a predetermined distance. That is, the gas collecting portion G may be configured such that the terrace portion T of the battery cell 100 is inserted.

According to this embodiment, it may be more advantageous in suppressing external emission of the flame, spark, or the like ejected from the battery cell 100. In particular, when the internal pressure of the battery cell 100 increases due to thermal runaway or the like, there is a high possibility that a flame, spark, gas, or the like is discharged toward the terrace portion T. At this time, if the terrace portion T exists in a form inserted inside the gas collecting portion G as shown in FIG. 24, as soon as the flame or the like is ejected from the terrace portion T, it may be introduced directly into the gas collecting portion G. Therefore, the effect of collecting a flame, spark, or the like inside the insulation block 400 is reliably achieved, thereby further improving the heat propagation suppression performance between cells.

The insulation block 400 may have an inner end in contact with the battery cell 100. For example, as indicated by A5 and A5' in FIG. 24, the inner end of the insulation block 400 may come into contact with the accommodation portion R of the battery cell 100.

According to this embodiment of the present disclosure, it may be advantageous for the insulation block 400 and the battery cell 100 to form a closed space so that a flame, spark, or the like is collected in the closed space. In particular, the gas collecting portion G may be formed in the insulation block 400 as described above, and according to this embodiment, the inner space of the gas collecting portion G may be at least partially sealed. Therefore, it is possible to more reliably suppress the flame, spark, or the like introduced into the gas collecting portion G from leaking to the outside of the gas collecting portion G.

The insulation block 400 may include a buffer pad 430 as shown in FIGS. 23 and 24. In particular, the buffer pad 430 may be provided at the inner end of the insulation block 400 where the accommodation portion R of the battery cell 100 is located.

The buffer pad 430 may include various elastic materials known at the time of filing of this application. Moreover, the buffer pad 430 may be made of a material having a lower hardness or strength or a higher modulus of elasticity than other parts of the insulation block 400, for example the main body of the insulation block 400. For example, the buffer pad 430 may have a material such as silicon or rubber.

In particular, as in the former embodiment of FIG. 24, the inner end of the insulation block 400 may be configured to contact the battery cell 100. At this time, the buffer pad 430 may be provided at a portion of the insulation block 400 in direct contact with the battery cell 100. That is, the buffer pad 430 may be configured to directly contact the battery cell 100.

According to this embodiment of the present disclosure, it is possible to prevent the battery cell 100 from being damaged by the insulation block 400. In particular, when the end of the insulation block 400 is configured to be in contact with the battery cell 100, if an external shock or vibration occurs, the exterior of the battery cell 100, for example the cell pouch, may be damaged or broken due to the contact portion of the insulation block 400. However, according to this embodiment, the risk of damage or breakage of the cell pouch may be reduced due to the buffer pad 430.

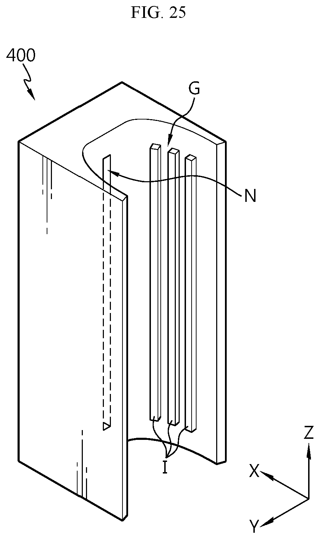

FIG. 25 is a perspective view schematically showing the configuration of an insulation block 400 according to still another embodiment of the present disclosure. For example, FIG. 25 may be regarded as a modified example of the configuration of FIG. 23.

Referring to FIG. 25, the insulation block 400 may include an inner blocking portion as indicated by I. In particular, the inner blocking portion I may be configured to protrude from the inner surface of the gas collecting portion G of the insulation block 400. For example, the inner blocking portion I may be formed to be elongated in the upper and lower direction on the inner surface of the gas collecting portion G of the insulation block 400. In addition, the inner blocking portion I may be formed in plurality on the gas collecting portion G of the insulation block 400.

According to this embodiment of the present disclosure, it is possible to suppress the flame, spark, or the like introduced into the inner space of the gas collecting portion G from moving. That is, since the flame, spark, or the like has strong linearity during movement, the movement may be suppressed if a protruding structure such as the inner blocking portion I exists in the inner space of gas collecting portion G. Therefore, in this case, the effect of collecting the flame, spark, or the like is improved in the gas collecting portion G of the insulation block 400, and it is possible to more effectively suppress the flame, spark, or the like from being discharged to the outside.

Meanwhile, in the embodiment of FIG. 25, it has been described that the movement of a flame, spark, or the like in the gas collecting portion G of the insulation block 400 is suppressed through a protruding structure, called the inner blocking portion I, but it is also possible to implement a configuration that suppresses the movement of a flame, spark, or the like through a groove or other types of uneven structures.

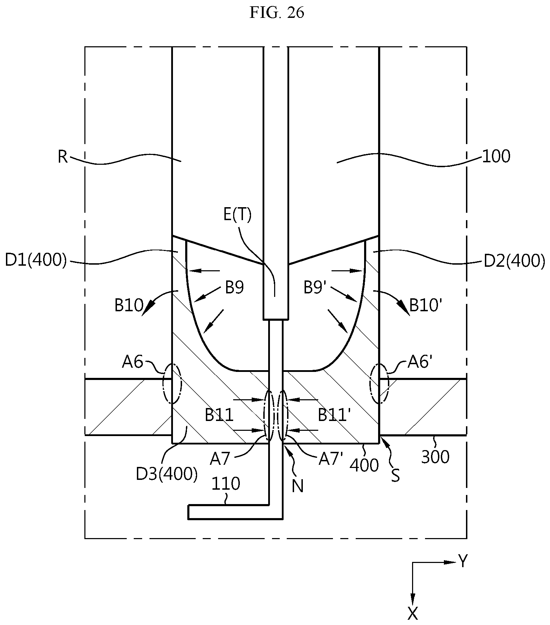

The insulation block 400 may be configured to come into close contact with the electrode lead 110 or the slot S of the separation member 300 when gas is discharged from the battery cell 100. This will be described in more detail with reference to FIG. 26.

FIG. 26 is a cross-sectional view schematically showing some components of the battery module including the insulation block 400 according to still another embodiment of the present disclosure. The configuration of FIG. 26 may be regarded as having a form similar to that of the insulation block 400 shown in FIG. 23.

Referring to FIG. 26, the insulation block 400 may include a first side portion as indicated by D1 and a second side portion as indicated by D2 on the left and right sides of the sealing portion E (terrace portion T) of the battery cell 100, respectively. In addition, the insulation block 400 may include a connection portion D3 as indicated by D3 to connect the first side portion D1 and the second side portion D2. In particular, the connection portion D3 may connect the outer ends of the first side portion D1 and the second side portion D2 to each other. In addition, the inner ends of the first side portion D1 and the second side portion D2 may extend or protrude toward the accommodation portion R of the battery cell 100. Moreover, the space defined by the first side portion D1, the second side portion D2, and the connection portion D3 may form the gas collecting portion G described above.

In this embodiment, when a flame, gas, or the like is generated from the battery cell 100 and collected in the gas collecting portion G, the internal pressure of the gas collecting portion G increases, so that the first side portion D1 and the second side portion D2 are may receive a force as indicated by B9 and B9'. In this case, not only the outer surfaces of the first side portion D1) and the second side portion D2 in the left and right direction (Y-axis direction but also the outer surface of the connection portion D3 may receive a force to move outward as indicated by arrows B10 and B10'. Accordingly, the separation space between the insulation block 400 and the slot S of the separation member 300 may be eliminated or reduced.

In addition, in this embodiment, when the first side portion D1 and the second side portion D2 receive forces as indicated by B9 and B9', the lead insert portion N of the insulation block 400 may receive a force to move toward the electrode lead 110, by the principle of leverage, as indicated by arrows B11 and B11'. Accordingly, the separation space between the inner surface of the lead insert portion N and the electrode lead 110 may be eliminated or reduced.

Therefore, according to this embodiment, the sealing force between the insulation block 400 and the separation member 300 and/or between the insulation block 400 and the electrode lead 110 may be further improved. In particular, according to this embodiment, in an emergency situation in which a venting gas or the like is generated from the battery cell 100, the sealing force may be automatically improved only by gas generation without a separate driving source. Therefore, the effect of suppressing propagation of a flame, heat, or the like by the insulation block 400 may be improved more efficiently.

A battery pack according to the present disclosure may include one or more battery modules according to the present disclosure described above. In addition, the battery pack according to the present disclosure may further include various components other than these battery modules, for example components of the battery pack known at the time of filing of this application, such as a BMS or a bus bar between modules, a pack case, a relay, and a current sensor.

In addition, a battery pack according to another embodiment of the present disclosure may be formed similar to the battery module described above. In particular, the battery pack according to the present disclosure may be configured such that the module case 200 in the battery module described above is replaced with a pack case.

In this case, the battery pack according to the present disclosure includes a plurality of battery cells 100 having an electrode lead 110, a pack case for accommodating the plurality of battery cells 100 in an inner space, a separation member 300 configured to separate at least some of the plurality of battery cells 100 and having a slot S so that the electrode lead 110 may be inserted, and an insulation block 400 having an electrical insulating material and configured to surround an outer side of at least a part of the electrode lead 110 inserted into the slot S. In the case of such a battery pack, in the contents of the battery module described above based on the various embodiments above, the contents of the 'module case 200' may be replaced with the contents of the 'pack case', the term 'battery module' may be changed to 'battery pack', and other configurations or features may be mostly applied as is. Therefore, the battery pack of this embodiment will not be described in detail. However, a control unit of the battery pack such as a BMS may be accommodated together in the pack case in addition to the battery cell 100, the separation member 300, and the insulation block 400.

In particular, such a battery pack may be more usefully adopted in a cell-to-pack (CTP) configuration in which a plurality of battery cells 100 are not modularized through the module case 200 and the like, but are directly accommodated in a pack case.

The battery module or the battery pack according to the present disclosure may be applied to a vehicle such as an electric vehicle or a hybrid electric vehicle. That is, the vehicle according to the present disclosure may include the battery module according to the present disclosure or the battery pack according to the present disclosure. In addition, the vehicle according to the present disclosure may further include various other components included in a vehicle in addition to the battery module or the battery pack. For example, the vehicle according to the present disclosure may further include a vehicle body, a motor, a control device such as an electronic control unit (ECU), and the like in addition to the battery module according to the present disclosure.

In addition, the battery module according to the present disclosure may be applied to an energy storage system (ESS). That is, the energy storage system according to the present disclosure may include the battery module according to the present disclosure or the battery pack according to the present disclosure.

The present disclosure has been described in detail. However, it should be understood that the detailed description and specific examples, while indicating preferred embodiments of the disclosure, are given by way of illustration only, since various changes and modifications within the scope of the claims will become apparent to those skilled in the art.

### Reference Signs

100: battery cell
110: electrode lead
200: module case
210: upper plate, 220: lower plate, 230: left plate, 240: right plate, 250: front plate, 260: rear plate
300: separation member
310: first separation portion, 320: second separation portion, 330: third separation portion
400: insulation block
410: first block, 420: second block, 430: buffer pad
500: bus bar assembly
510: bus bar housing, 520: bus bar terminal
S: slot
N: lead insert portion
R: accommodation portion
E: sealing portion
T: terrace portion
P: stopper
G: gas collecting portion

## Claims

1. A battery module, comprising:
a plurality of battery cells (100) having electrode leads (110);
a module case (200) configured to accommodate the plurality of battery cells (100) in an inner space;
a separation member (300) configured to divide a space between at least some of the plurality of battery cells (100) and having a slot (S) into which the electrode lead (110) is inserted, wherein the separation member (300) includes a first separation portion (310) interposed between adjacent battery cells (100), and a second separation portion (320) connected to an end of the first separation portion (310) and having the slot (S) formed therein; and
an insulation block (400) having an electrical insulating material and configured to surround an outer side of at least a part of the electrode lead (110) inserted into the slot (S).

2. The battery module according to claim 1,
wherein the separation member (300) has a metal material.

3. The battery module according to claim 1,
wherein the insulation block (400) is configured to electrically insulate the electrode lead (110) and the separation member (300) from each other.

4. The battery module according to claim 1,
wherein the insulation block (400) is configured to seal the slot (S) in a state where the electrode lead (110) is inserted therein.

5. The battery module according to claim 1,
wherein the insulation block (400) includes two or more unit blocks (410, 420) coupled to each other.

6. The battery module according to claim 1,
wherein at least one of the first separation portion (310) and the second separation portion (320) is configured in a plate shape.

7. The battery module according to claim 1,
wherein the first separation portion (310) and the second separation portion (320) are coupled perpendicularly.

8. The battery module according to claim 1,
wherein the separation member (300) further includes a third separation portion (330) connected to an end of each of the first separation portion (310) and the second separation portion (320) and configured to cover one side of the plurality of battery cells (100).

9. The battery module according to claim 1,
wherein the insulation block (400) is configured to be mounted in the slot (S) of the separation member (300).

10. The battery module according to claim 1, further comprising:
a bus bar assembly (500) configured to electrically connect the electrode leads (110) of the plurality of battery cells (100),
wherein the bus bar assembly (500) is located outside the separation member (300).

11. The battery module according to claim 10,
wherein the bus bar assembly (500) includes a bus bar housing (510) made of an electrical insulating material and provided outside the separation member (300), and a bus bar terminal (520) made of an electrical conductive material and coupled to the bus bar housing (510).

12. The battery module according to claim 1,
wherein the insulation block (400) has a gas collecting portion (G) configured to allow a discharged gas to be introduced therein when the gas is discharged from the battery cell (100).

13. The battery module according to claim 1,
wherein the insulation block (400) is configured to surround at least a part of a sealing portion (E) of the battery cell (100).

14. The battery module according to claim 1,
wherein the insulation block (400) includes a buffer pad (430) provided at an inner end.

15. The battery module according to claim 1,
wherein the insulation block (400) is configured to be in close contact with the electrode lead (110) or the slot (S) of the separation member (300) when gas is discharged from the battery cell (100).

16. A battery pack, comprising the battery module according to any one of claims 1 to 15.

17. A vehicle, comprising the battery module according to any one of claims 1 to 15.

## Patentansprüche

1. Batteriemodul aufweisend:
mehrere Batteriezellen (100) mit Elektrodenleitungen (110);
ein Modulgehäuse (200), das konfiguriert ist, die mehreren Batteriezellen (100) in einem Innenraum aufzunehmen;
ein Trennelement (300), das konfiguriert ist, einen Raum zwischen zumindest einigen der mehreren Batteriezellen (100) zu unterteilen, und das einen Schlitz (S) aufweist, in den die Elektrodenleitung (110) eingesetzt ist, wobei das Trennelement (300) einen ersten Trennabschnitt (310), der zwischen benachbarten Batteriezellen (100) angeordnet ist, und einen zweiten Trennabschnitt (320) aufweist, der mit einem Ende des ersten Trennabschnitts (310) verbunden ist und in dem der Schlitz (S) ausgebildet ist; und
einen Isolationsblock (400), der ein elektrisch isolierendes Material aufweist und konfiguriert ist, eine Außenseite von zumindest einem Teil der Elektrodenleitung (110) zu umgeben, die in den Schlitz (S) eingesetzt ist.

2. Batteriemodul nach Anspruch 1,
wobei das Trennelement (300) ein Metallmaterial enthält.

3. Batteriemodul nach Anspruch 1,
wobei der Isolationsblock (400) konfiguriert ist, die Elektrodenleitung (110) und das Trennelement (300) elektrisch voneinander zu isolieren.

4. Batteriemodul nach Anspruch 1,
wobei der Isolationsblock (400) konfiguriert ist, den Schlitz (S) in einem Zustand zu verschließen, in dem die Elektrodenleitung (110) darin eingesetzt ist.

5. Batteriemodul nach Anspruch 1,
wobei der Isolationsblock (400) zwei oder mehr Einheitsblöcke (410, 420) aufweist, die miteinander gekoppelt sind.

6. Batteriemodul nach Anspruch 1,
wobei der erste Trennabschnitt (310) und/oder der zweite Trennabschnitt (320) in einer Plattenform konfiguriert ist.

7. Batteriemodul nach Anspruch 1,
wobei der erste Trennabschnitt (310) und der zweite Trennabschnitt (320) senkrecht gekoppelt sind.

8. Batteriemodul nach Anspruch 1,
wobei das Trennelement (300) ferner einen dritten Trennabschnitt (330) aufweist, der mit einem Ende des ersten Trennabschnitts (310) und des zweiten Trennabschnitts (320) verbunden ist und konfiguriert ist, eine Seite der mehreren Batteriezellen (100) abzudecken.

9. Batteriemodul nach Anspruch 1,
wobei der Isolationsblock (400) konfiguriert ist, in dem Schlitz (S) des Trennelements (300) montiert zu werden.

10. Batteriemodul nach Anspruch 1, ferner aufweisend:
eine Sammelschienenanordnung (500), die konfiguriert ist, die Elektrodenleitungen (110) der mehreren Batteriezellen (100) elektrisch zu verbinden,
wobei die Sammelschienenanordnung (500) außerhalb des Trennelements (300) angeordnet ist.

11. Batteriemodul nach Anspruch 10,
wobei die Sammelschienenanordnung (500) ein Sammelschienengehäuse (510), das aus einem elektrisch isolierenden Material hergestellt ist und außerhalb des Trennelements (300) bereitegestellt ist, und einen Sammelschienenanschluss (520) aufweist, der aus einem elektrisch leitfähigen Material hergestellt ist und mit dem Sammelschienengehäuse (510) gekoppelt ist.

12. Batteriemodul nach Anspruch 1,
wobei der Isolationsblock (400) einen Gassammelabschnitt (G) aufweist, der konfiguriert ist, zu ermöglichen, dass ein abgegebenes Gas darin eingeleitet wird, wenn das Gas aus der Batteriezelle (100) abgegeben wird.

13. Batteriemodul nach Anspruch 1,
wobei der Isolationsblock (400) konfiguriert ist, zumindest einen Teil eines Dichtungsabschnitts (E) der Batteriezelle (100) zu umgeben.

14. Batteriemodul nach Anspruch 1,
wobei der Isolationsblock (400) ein Pufferpad (430) aufweist, das an einem inneren Ende bereitgestellt ist.

15. Batteriemodul nach Anspruch 1,
wobei der Isolationsblock (400) konfiguriert ist, in engem Kontakt mit der Elektrodenleitung (110) oder dem Schlitz (S) des Trennelements (300) zu sein, wenn Gas aus der Batteriezelle (100) abgegeben wird.

16. Batteriepack aufweisend das Batteriemodul nach einem der Ansprüche 1 bis 15.

17. Fahrzeug aufweisend das Batteriemodul nach einem der Ansprüche 1 bis 15.

## Revendications

1. Module de batterie, comprenant :
une pluralité de cellules de batterie (100) dotées de conducteurs d'électrode (110) ;
un boîtier de module (200) configuré pour contenir la pluralité de cellules de batterie (100) dans un espace intérieur ;
un élément séparateur (300) configuré pour diviser un espace entre au moins certains de la pluralité de cellules de batterie (100), et possédant une fente (S) dans laquelle est inséré le conducteur d'électrode (110), l'élément séparateur (300) comprenant une première partie de séparation (310) intercalée entre des cellules de batterie (100), et une deuxième partie de séparation (320) connectée à un bout de la première partie de séparation (310), et au sein de laquelle est formée la fente (S) ;
et
un bloc isolant (400) comprenant un matériau d'isolation électrique, et configuré pour entourer un côté extérieur d'au moins une partie du conducteur d'électrode (110) inséré dans la fente (S).

2. Module de batterie selon la revendication 1,
l'élément séparateur (300) possédant un matériau métallique.

3. Module de batterie selon la revendication 1,
le bloc isolant (400) étant configuré pour isoler électriquement, l'un de l'autre, le conducteur d'électrode (110) et l'élément séparateur (300).

4. Module de batterie selon la revendication 1,
le bloc isolant (400) étant configuré pour scelle la fente (S) dans un état où le conducteur d'électrode (110) est inséré dedans.

5. Module de batterie selon la revendication 1,
le bloc isolant (400) comprenant deux ou plusieurs blocs unitaires (410, 420) couplés les uns aux autres.

6. Module de batterie selon la revendication 1,
au moins une de la première partie de séparation (310) et de la deuxième partie de séparation (320) étant configurée sous une forme plate.

7. Module de batterie selon la revendication 1,
la première partie de séparation (310) et la deuxième partie de séparation (320) étant couplées perpendiculairement.

8. Module de batterie selon la revendication 1,
l'élément séparateur (300) comprenant en outre une troisième partie de séparation (330) connectée à un bout de chacune de la première partie de séparation (310) et de la deuxième partie de séparation (320), et configurée pour couvrir un côté de la pluralité de cellules de batterie (100).

9. Module de batterie selon la revendication 1,
le bloc isolant (400) étant configuré pour être monté dans la fente (S) de l'élément séparateur (300).

10. Module de batterie selon la revendication 1, comprenant en outre :
un ensemble de barre omnibus (500) configuré pour connecter électriquement les conducteurs d'électrode (110) de la pluralité de cellules de batterie (100),
l'ensemble de barre omnibus (500) étant situé hors de l'élément séparateur (300).

11. Module de batterie selon la revendication 10,
l'ensemble de barre omnibus (500) comprenant un boîtier de barre omnibus (510) réalisé avec un matériau isolant électriquement, et agencé hors de l'élément séparateur (300), et une borne de barre omnibus (520) réalisée avec un matériau électro-conducteur, et couplée au boîtier de barre omnibus (510).

12. Module de batterie selon la revendication 1,
le bloc isolant (400) possédant une partie de collecte de gaz (G) configurée pour y permettre l'introduction d'un gaz refoulé, lorsque le gaz est refoulé de la cellule de batterie (100).

13. Module de batterie selon la revendication 1,
le bloc isolant (400) étant configuré pour entourer au moins une partie d'un élément de scellement (E) de la cellule de batterie (100).

14. Module de batterie selon la revendication 1,
le bloc isolant (400) comprenant un coussinet tampon (430) agencé à un bout intérieur.

15. Module de batterie selon la revendication 1,
le bloc isolant (400) étant configuré pour être en contact étroit avec le conducteur d'électrode (110) ou la fente (S) de l'élément séparateur (300) lorsque du gaz est refoulé de la cellule de batterie (100).

16. Bloc-batterie comprenant le module de batterie selon une quelconque des revendication 1 à 15.

17. Véhicule comprenant le module de batterie selon une quelconque des revendication 1 à 15.
